# EUROPÄISCHE PATENTSCHRIFT

(11) **EP 2 934 966 B1**
(45) Veröffentlichungstag und Bekanntmachung des Hinweises auf die Patenterteilung: **19.10.2016**
(21) Anmeldenummer: 13785363.6
(22) Anmeldetag: 31.10.2013
(51) Int. Cl.: B60T 8/1755, B60W 30/02, B60W 40/072, B60W 30/04

(54) **VERFAHREN ZUM BESTIMMEN EINER SOLL-KURVENNEIGUNG EINES KRAFTFAHRZEUGS BEIM BEFAHREN EINES KURVENFÖRMIGEN FAHRBAHNABSCHNITTS**
METHOD FOR DETERMINING A TARGET CURVE INCLINE OF A MOTOR VEHICLE DURING TRAVELING OF A CURVED ROADWAY SECTION
PROCÉDÉ DE DÉTERMINATION DE L'ASSIETTE THÉORIQUE EN VIRAGE D'UN VÉHICULE LORS DU PARCOURS D'UN TRONÇON DE CHAUSSÉE FORMANT UNE COURBE

(30) Priorität: 20.12.2012 DE 102012024970
(43) Veröffentlichungstag der Anmeldung: 28.10.2015
(73) Patentinhaber: Daimler AG, 70327 Stuttgart (DE)
(72) Erfinder: AMMON, Dieter, 71686 Remseck (DE); HAINBUCH, Claus-Michael, 71384 Weinstadt (DE); RAU, Magnus, 73230 Kirchheim unter Teck (DE)
(74) Vertreter: JENSEN & SON
(86) Internationale Anmeldenummer: PCT/EP2013/003287
(87) Internationale Veröffentlichungsnummer: WO 2014/094934

(56) Entgegenhaltungen:
- EP-A1- 2 322 903
- DE-C1- 19 738 608

## Beschreibung

Die vorliegende Erfindung betrifft ein Verfahren zum Bestimmen einer Soll-Kurvenneigung eines Kraftfahrzeugs beim Befahren eines kurvenförmigen Fahrbahnabschnitts sowie eine Vorrichtung zum Bestimmen einer Kurvenneigung eines Kraftfahrzeugs beim Befahren eines kurvenförmigen Fahrbahnabschnitts. Die Erfindung betrifft ferner ein Kraftfahrzeug mit einer solchen Vorrichtung.

Unter dem Begriff "Active Body Control (ABC)" sind elektro-hydraulisch aktive Fahrwerkssysteme bekannt, welche neben einer herkömmlichen Federungs- und Dämpfungsfunktion auch die Möglichkeit des gezielten Einstellens von Nick- und Wankwinkeln erlauben. Als Wanken bezeichnet man dabei eine Drehbewegung eines Kraftfahrzeugs um seine Längsachse. Eine solche Wankbewegung kann sich beim Befahren eines kurvenförmigen Fahrbahnabschnitts durch das Kraftfahrzeug ergeben, wenn sich das Kraftfahrzeug aufgrund der auftretenden Fliehkräfte um einen bestimmten Wankwinkel nach außen neigt. Der sich dabei einstellende Wankwinkel hängt von einer Querbeschleunigung des Kraftfahrzeugs, dessen Schwerpunkthöhe, dem Fahrwerksaufbau des Kraftfahrzeugs sowie von dessen Geschwindigkeit ab.

Die beim Befahren des kurvenförmigen Fahrbahnabschnitts auftretenden Zentrifugalkräfte werden von Insassen des Kraftfahrzeugs häufig als unangenehm empfunden und können daher zu einer erheblichen Reduzierung des Fahrkomforts führen. Eine Möglichkeit, die komfort-mindernde Wirkung von solchen unerwünschten Querkräften auf die Insassen des Kraftfahrzeugs zu reduzieren, besteht darin, in dem Kraftfahrzeug mittels "Active Body Control (ABC)" eine Neigetechnik zu realisieren, wie sie schon seit geraumer Zeit bei Schienenfahrzeugen zum Einsatz kommt. Durch Verwendung einer derartigen Neigetechnik ist es möglich, dass sich das Kraft- bzw. Schienenfahrzeug beim Befahren eines kurvenförmigen Fahrbahn- bzw. Schienenabschnitts nicht fliehkraftbedingt nach außen, sondern durch entsprechende Ansteuerung eines Fahrwerks des Kraftfahrzeugs in die entgegengesetzte Richtung, also nach innen, neigt. Hierzu kann das Fahrwerk mit geeigneten Aktoren, beispielsweise in der Art von höhenverstellbaren Federbeinen, versehen sein, welche den Fahrzeugrahmen jeweils mit den Rädern des Kraftfahrzeugs höhenverstellbar verbinden, so dass ein bestimmter Wankwinkel des Kraftfahrzeugs eingestellt werden kann.

Da die beim Befahren des kurvenförmigen Fahrbahnabschnitts auftretenden Fliehkräfte von verschiedenen Faktoren wie z.B. einer Fahrbahnkrümmung des Fahrbahnabschnitts oder der momentanen Geschwindigkeit abhängen, muss auch der im Sinne einer Neigetechnik an dem Fahrwerk des Kraftfahrzeugs einzustellende Wankwinkel in Abhängigkeit von diesen Parametern bestimmt werden, um bei den Insassen des Kraftfahrzeugs einen möglichst hohen Fahrtkomfort sicherzustellen.

Die DE 10 2010 046 317 A1 beschreibt ein Verfahren zum Einstellen der räumlichen Lage einer Wankachse, um welche das Kraftfahrzeug um einen vorbestimmten Wankwinkel drehbar ist. Gemäß dem Verfahren wird zunächst in einem ersten Schritt eine räumliche Soll-Lage der Position der Wankachse festgelegt und anschließend in einem zweiten Schritt eine Querbeschleunigung des Kraftfahrzeugs bestimmt. In einem dritten Schritt wird schließlich eine Soll-Querneigung des Kraftfahrzeugs und eine Soll-Querablage des Kraftfahrzeugs in Abhängigkeit von der Querbeschleunigung ermittelt, so dass bei Einstellen der Soll-Querneigung und der Soll-Querablage eine Verlagerung der Wankachse in die Soll-Lage bewirkt wird. Um sicherzustellen, dass das Kraftfahrzeug die im vorangehenden Schritt ermittelte Sollquerneigung einnimmt, wird wenigstens ein Aktuator einer aktiven Fahrwerks-Vorrichtung des Kraftfahrzeugs entsprechend eingestellt. Zusätzlich wird wenigstens ein Aktuator zum Beeinflussen der Querbewegung des Kraftfahrzeugs derart eingestellt, dass das Kraftfahrzeug zusätzlich auch die im vorangehenden Schritt ermittelte Soll-Querablage einnimmt. Die zu erwartende Querbeschleunigung kann beispielsweise mit Hilfe eines am Kraftfahrzeug angebrachten Kamerasystems ermittelt werden, welches den zu befahrenen kurvenförmigen Fahrbahnabschnitt im Vorfeld des Kraftfahrzeugs optisch erfasst und zur Bestimmung der zu erwartenden Querbeschleunigung analysiert.

Die DE 10 2006 018 A1 beschreibt ein Verfahren zur Bestimmung des Wankwinkels eines Kraftfahrzeugs mit zumindest einer Vorrichtung zum Bestimmen der Gierrate oder einer damit korrelierten Größe sowie einer Vorrichtung zum Bestimmen der Fahrzeuggeschwindigkeit und einem gegebenenfalls nach vorne gerichteten Kamerasystem. Der Wankwinkel wird unter Verwendung der Gierrate oder einer damit korrelierten Größe und der spezifischen Wank-Federsteifigkeit des Fahrzeugs bestimmt.

Die DE 197 38 608 C1 offenbart ein Verfahren zur Bestimmung einer Soll-Kurvenneigung eines Kraftfahrzeugs in Abhängigkeit eines bestimmten momentanen Fahrbahnkrümmung.

Es ist eine Aufgabe der vorliegenden Erfindung, eine verbesserte Ausführungsform für ein Verfahren zum Bestimmen einer Soll-Kurvenneigung (=Wankwinkel) eines Kraftfahrzeugs beim Befahren eines kurvenförmigen Fahrbahnabschnitts sowie eine Vorrichtung zum Bestimmen dieser Soll-Kurvenneigung anzugeben.

Oben genannte Aufgabe wird gelöst durch den Gegenstand der unabhängigen Ansprüche. Bevorzugte Ausführungsformen sind Gegenstand der abhängigen Ansprüche.

Die Erfindung beruht auf dem allgemeinen Gedanken, die zu bestimmende Soll-Kurvenneigung basierend auf einer mittels eines optischen Detektionssystems ermittelten momentanen Fahrbahnkrümmung zu berechnen, wobei die Bestimmung der momentanen Fahrbahnkrümmung zusätzlich unter Verwendung eines Fahrzeug-Navigationssystems des Kraftfahrzeugs erfolgt. Hierzu kann die in den Kartendaten enthaltene Information bzgl. Fahrbahnkrümmung der jeweiligen Fahrbahnabschnitte entnommen werden.

Zusätzlich zu den von dem optischen Detektionssystem bereitgestellten Sensor-Ausgangsdaten können zur Berechnung der Fahrbahnkrümmung also Kartendaten des Fahrzeug-Navigationssystems herangezogen werden. Ein großer Vorteil der Verwendung solcher Kartendaten besteht darin, dass die Fahrbahnkrümmung nicht erst beim Befahren eines bestimmten Fahrbahnabschnitts bestimmt werden kann, sondern durch entsprechendes Auslesen der Kartendaten für beliebige Fahrbahnabschnitte der im Fahrzeug-Navigationssystem gespeicherten Kartendaten ermittelt werden kann. Zudem enthalten solche Kartendaten häufig ggf. auch weitere Karteninformationen wie z.B. eine Längsneigung und - wenn vorhanden - auch eine Querneigung des Fahrbahnabschnitts. Da die Kartendaten des Fahrzeug-Navigationssystems alleine für die Bestimmung der Fahrbahnkrümmung in einem Praxisbetrieb des Kraftfahrzeugs nicht ausreichend sind (da die Kartendaten beispielsweise aufgrund von baulichen Veränderungen des Fahrbahnverlaufs veraltet sein können), erfolgt die Bestimmung der momentanen Fahrbahnkrümmung unter Verwendung des Fahrzeug-Navigationssystems erfindungsgemäß nur unterstützend zu einer eigentlichen Bestimmung der Fahrbahn-Krümmung mittels des optischen Detektionssystems, welches beispielsweise ein Kamerasystem sein kann, das als Sensor-Ausgangsdaten ein Bild eines Vorfeldes des Kraftfahrzeugs bereitstellt.

In diesem Zusammenhang ist es insbesondere vorstellbar, dass die mittels des Fahrzeug-Navigationssystems ermittelte momentane Fahrbahnkrümmung zur Verifizierung der mittels des optischen Detektionssystems ermittelten Fahrbahnkrümmung herangezogen wird. Auch kann daran gedacht sein, dass mit Hilfe des Fahrzeug-Navigationssystems mittels des optischen Detektionssystems bestimmte, fehlerbehaftete Werte der momentanen Fahrbahnkrümmung korrigiert werden können.

Durch die erfindungsgemäße Entnahme der Fahrbahnkrümmung aus Kartendaten des Fahrzeug-Navigations-systems ist es also möglich, verschiedenartige Störeinflüsse wie eine Straßenanregung oder ein bestimmtes Lenkverhalten des Fahrers des Kraftfahrzeugs aus den Sensorsignalen des optischen Detektionssystems herauszufiltern.

Aus der mittels des optischen Detektionssystems in Verbindung mit dem Fahrzeug-Navigationssystem ermittelten momentanen Fahrbahnkrümmung kann mittels des erfindungsgemäßen Verfahrens eine momentane Querbeschleunigung des Kraftfahrzeugs und daraus die gewünschte Soll-Kurvenneigung bestimmt werden, wobei diese mit einem geschwindigkeitsabhängigen Gewichtungsfaktor gewichtet wird. Somit kann mittels des erfindungsgemäßen Verfahrens eine für die Befahrung des kurvenförmigen Fahrbahnabschnitts optimale Soll-Kurvenneigung (=Wankwinkel) bestimmt werden, welche, wenn sie mittels eines verstellbaren Fahrwerks des Kraftfahrzeugs eingestellt wird, für einen verbesserten Fahrtkomfort bei den Insassen des Kraftfahrzeugs führt. Mittels der Gewichtung der momentanen Soll-Kurvenneigung mit einem geschwindigkeitsabhängigen Gewichtungsfaktor kann ein optimierter, in dem Fahrwerk einzustellender Wankwinkel des Kraftfahrzeugs für das Befahren des kurvenförmigen Fahrbahnabschnitts ermittelt werden, bei welchem auf einen Fahrzeuginsassen wirkende Querkräfte besonders gut abgeschwächt oder sogar nahezu vollständig unterdrückt werden können, so dass sich der Fahrkomfort für die Insassen des Kraftfahrzeugs deutlich erhöhen lässt. Grundsätzlich lässt sich bei der Anwendung des erfindungsgemäßen Verfahrens in einem Kraftfahrzeug die momentane Querbeschleunigung und daraus abgeleitet die gesuchte Soll-Kurvenneigung für das Kraftfahrzeug mit besonders hoher Betriebssicherheit ermitteln.

In dem erfindungsgemäßen Verfahren kann in einem ersten Schritt a) eine momentane Querbeschleunigung des Kraftfahrzeugs in Abhängigkeit von einer momentanen Geschwindigkeit des Kraftfahrzeugs aus einer mittels eines optischen Detektionssystems bestimmten momentanen Fahrbahnkrümmung des kurvenförmigen Fahrbahnabschnitts bestimmt werden, wobei das Bestimmen der momentanen Fahrbahnkrümmung gemäß Schritt a) unter Verwendung eines Fahrzeug-Navigationssystems des Kraftfahrzeugs erfolgt.

In einem zweiten Schritt b) wird eine momentane Soll-Kurvenneigung für das Kraftfahrzeug aus der in Schritt a) berechneten momentanen Querbeschleunigung bestimmt. In einem dritten Schritt c) wird schließlich eine modifizierte momentane Soll-Kurvenneigung durch Gewichtung der in Schritt b) berechneten Soll-Kurvenneigung mit einem geschwindigkeitsabhängigen Soll-Kurvenneigung-Gewichtungsfaktor berechnet. Basierend auf der in Schritt c) berechneten modifizierten Soll-Kurvenneigung lässt sich ein Fahrwerk des Kraftfahrzeugs derart ansteuern, dass das Kraftfahrzeug relativ zur Fahrbahnoberfläche des zu befahrenden kurvenförmigen Fahrbahnabschnitts den durch die modifizierte Soll-Kurvenneigung definierten Wankwinkel annimmt. Hierzu kann die Fahrwerksvorrichtung beispielsweise mit geeigneten höhenverstellbaren Aktoren in der Art von Federbeinen versehen sein.

In einer bevorzugten Ausführungsform kann das Bestimmen der Fahrbahnkrümmung mittels des Fahrzeug-Navigationssystems durch Extraktion der Fahrbahnkrümmung aus den dem gerade befahrenen Fahrbahnabschnitt zugeordneten Kartendaten des Fahrzeug-Navigationssystems erfolgen, wobei die Zuordnung unter Verwendung einer von einem Positionssensor des Fahrzeug-Navigationssystem bereitgestellten momentanen Position des Kraftfahrzeugs erfolgt. Im Zuge einer solchen Extraktion kann die aus den Kartendaten extrahierte Fahrbahnkrümmung mit der mittels des optischen Detektionssystems bestimmten momentanen Fahrbahnkrümmung verglichen werden. Auch ist denkbar, die mittels des Fahrzeug-Navigationssystems ermittelte momentane Fahrbahnkrümmung zur Verifizierung der mittels des optischen Detektionssystems ermittelten momentanen Fahrbahn-Krümmung heranzuziehen.

In einer weiterbildenden oder alternativen Ausführungsform kann zur Bestimmung der momentanen Querbeschleunigung eine nicht-optische Sensorik in Kombination mit der optischen Sensorik bzw. alternativ zu dieser zum Einsatz kommen. Im Falle der Verwendung der nicht-optischen Sensorik in Kombination mit dem optischen Detektionssystem kann die mittels des Fahrzeugs-Navigationssystems bestimmte momentane Fahrbahnkrümmung wie vorangehend erläutert zur unterstützenden Ermittlung der momentanen Fahrbahnkrümmung mittels des optischen Detektionssystems herangezogen werden.

Für den Fall, dass die momentane Querbeschleunigung des Kraftfahrzeugs hingegen nicht mittels eines optischen Detektionssystems bestimmt werden soll, kann die momentane Querbeschleunigung mittels des Fahrzeug-Navigationssystems (durch Bestimmung der momentanen Fahrbahnkrümmung anstelle der Bestimmung mittels des optischen Detektionssystems) ermittelt werden, um die mittels der nicht-optischen Sensorik bestimmte momentane Querbeschleunigung zu verifizieren. Somit kann die nicht-optische Sensorik einerseits synergetisch mit dem optischen Detektionssystem oder alternativ zu diesem benutzt werden, und in beiden Fällen das Fahrzeug-Navigationssystem für Verifikationszwecke verwendet werden. Auf diese Weise kann die momentane Querbeschleunigung besonders genau bestimmt werden.

Bevorzugt umfasst die nicht-optische Sensorik einen Beschleunigungssensor, insbesondere einen g-Sensor, welcher als Sensor-Ausgangsdaten einen momentanen Sensor-Querbeschleunigungswert bereitstellt.

Alternativ oder zusätzlich kann die nicht-optische Sensorik in einer besonders bevorzugten Ausführungsform einen Gierraten-Sensor umfassen, welcher als Sensor-Ausgangsdaten eine momentane Giergeschwindigkeit bereitstellt. Die in Form einer momentanen Giergeschwindigkeit vorliegenden Sensor-Ausgangsdaten können optional mittels eines Phasenfilters oder/und eines Tiefpassfilters zusätzlich gefiltert werden, um unerwünschte Störungen in den Sensor-Ausgangsdaten, beispielsweise aufgrund von Unebenheiten in der Fahrbahnoberfläche der zu befahrenden Fahrbahn o. ä., korrigieren zu können.

In einer ebenfalls bevorzugten Ausführungsform kann die nicht-optische Sensorik einen Lenkradwinkelsensor oder/und ein Radwinkelsensor umfassen, welcher als Sensor-Ausgangsdaten einen momentanen Lenkradwinkel bzw. Radwinkel des Lenkrads bzw. der Räder des Kraftfahrzeugs bereitstellt. Bei der Ermittlung der momentanen Querbeschleunigung aus dem Lenkradwinkel bzw. Radwinkel kann für die mathematische Berechnung beispielsweise ein einfaches Einspurmodell verwendet werden. In weiterbildenden, präzisere Berechnungsergebnisse erlaubenden komplexeren Modellen, kann das Lenkungsverhalten oder/und das Reifen-Einlaufverhalten des Kraftfahrzeugs mit einbezogen sein, so dass bei einer solchen ganzheitlichen Betrachtung die Vorgaben eines Fahrers des Kraftfahrzeugs bei der Wankwinkel-Einstellung besonders schnell und effektiv umgesetzt werden können.

Mittels der Verwendung verschiedenartiger Sensortypen in der nicht-optischen Sensorik (Beschleunigungssensor, Gierratensensor, Lenkradwinkelsensor, Radwinkelsensor) zur Bestimmung der momentanen Querbeschleunigung kann die gesuchte Soll-Kurvenneigung unabhängig von einer eigentlichen Fahrspurinformation auf effektive Weise bestimmt werden.

In weiterbildenden Ausführungsformen kann auch in Abhängigkeit von verschiedenen internen und externen Parametern, beispielsweise vorbestimmten Betriebs- oder/und Fehlerzuständen der nicht-optischen Sensorik oder/und des optischen Detektionssystems, festgelegt werden, auf welche Weise die momentane Fahrbahnkrümmung oder/und die momentane Querbeschleunigung berechnet werden und ob dabei die nicht-optische Sensorik oder/und das optische Detektionssystem in Kombination mit dem Fahrzeug-Navigationssystem eingesetzt werden sollen oder nicht.

Erfindungsgemäß können zur Bestimmung der momentanen Querbeschleunigung also mehrere der oben genannten Sensortypen der nicht-optischen Sensorik miteinander kombiniert und zusammen mit dem Fahrzeug-Navigationssystem verwendet werden. Das erfindungsgemäße Verfahren bietet also in Bezug auf Genauigkeit und Betriebssicherheit eine maximale Flexibilität für die Bestimmung der momentanen Querbeschleunigung und damit auch für die daraus folgende Berechnung der Soll-Kurvenneigung des Kraftfahrzeugs.

Die Erfindung betrifft auch eine Vorrichtung zum Bestimmen einer Soll-Kurvenneigung eines Kraftfahrzeugs beim Befahren eines kurvenförmigen Fahrbahnabschnitts. Die Vorrichtung umfasst ein optisches Detektionssystem, mittels welchem eine momentane Fahrbahn-Krümmung eines momentan von dem Kraftfahrzeug befahrenen kurvenförmigen Fahrbahn-Abschnitts bestimmbar ist. Die Vorrichtung umfasst des Weiteren ein Fahrzeug-Navigationssystem, welches einen Datenspeicher mit Kartendaten und einen Positionssensor umfasst, und mittels welchem eine momentane Position des Kraftfahrzeugs bestimmbar ist. Erfindungsgemäß bestimmt das Steuergerät mittels des optischen Detektionssystems und in Kombination mit dem Fahrzeug-Navigationssystem die momentane Fahrbahn-Krümmung des kurvenförmigen Fahrbahn-Abschnitts und daraus eine momentane Soll-Kurvenneigung für das Kraftfahrzeug. Aus der momentanen Soll-Kurvenneigung wird durch Gewichtung mit einem Soll-Kurvenneigung-Gewichtungsfaktor eine modifizierte Soll-Kurvenneigung berechnet.

Die Erfindung betrifft ferner ein Kraftfahrzeug mit einer Vorrichtung mit den vorangehend genannten Merkmalen sowie mit einer von dem Steuergerät dieser Vorrichtung ansteuerbaren Fahrwerksvorrichtung, mittels welcher die von dem Steuergerät bestimmte modifizierte Soll-Kurvenneigung an dem Kraftfahrzeugs einstellbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: ein grobschematisches Ablaufschema des erfindungsgemäßen Verfahrens,
- Fig. 2: ein Kraftfahrzeug mit einer erfindungsgemäßen Vorrichtung zum Einstellen der Kurvenneigung eines Kraftfahrzeugs, wobei die Figur 2a eine Draufsicht und die Figur 2b eine Rückansicht des Kraftfahrzeugs zeigt.

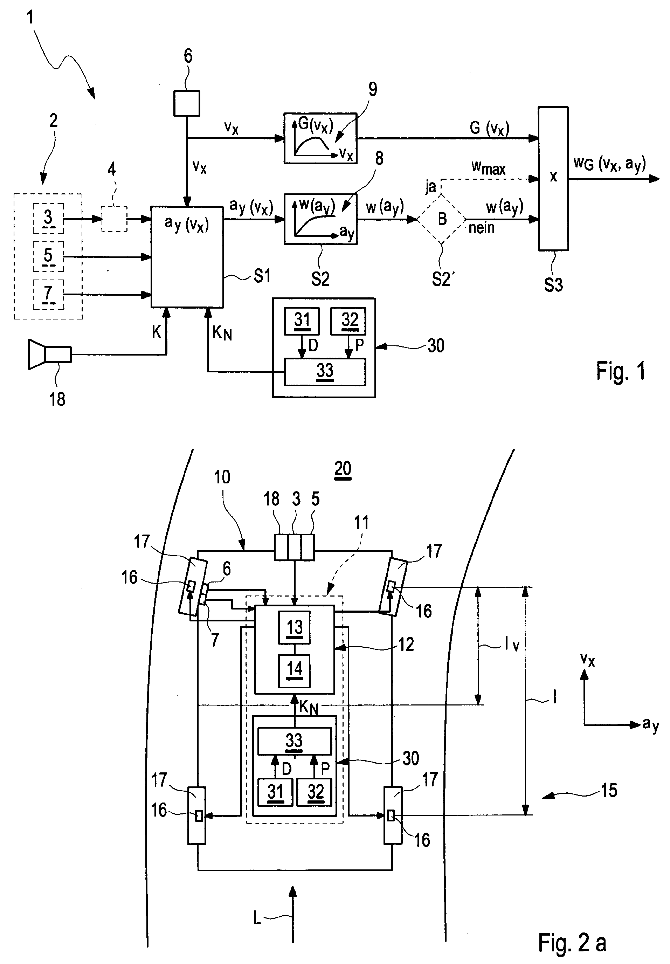

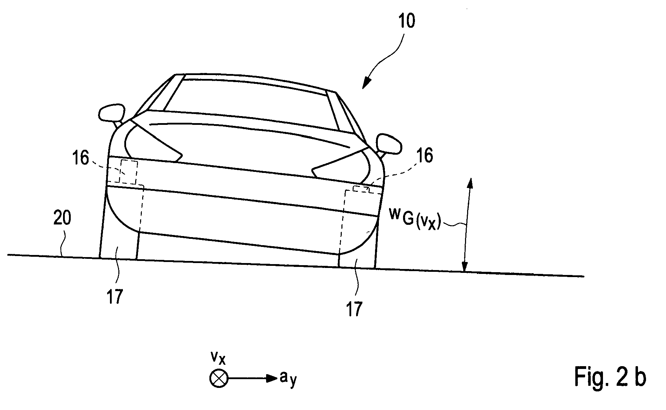

In der Figur 1 ist ein Ablaufschema des erfindungsgemäßen Verfahrens grobschematisch dargestellt und mit 1 bezeichnet. Die Figur 2 zeigt ein Kraftfahrzeug 10 mit einem Steuergerät 12 zur Durchführung des erfindungsgemäßen Verfahrens beim Befahren eines kurvenförmigen Fahrbahnabschnitts 20. Die Figur 2a zeigt das Kraftfahrzeug 10 grobschematisch in einer Draufsicht, die Figur 2b in einer Rückansicht.

In einem ersten Schritt S1 wird eine momentane Querbeschleunigung a_{y} des Kraftfahrzeugs 10 in Abhängigkeit von einer momentanen Geschwindigkeit vₓ des Kraftfahrzeugs 10 aus einer mittels eines optischen Detektionssystems 18 bestimmten momentanen Fahrbahnkrümmung K des kurvenförmigen Fahrbahnabschnitts 20 berechnet. Das optische Detektionssystem 18 kann hierzu ein Kamerasystem umfassen, von welchem ein Fahrzeugvorfeld eines das optische Detektionssystem 18 verwendenden Kraftfahrzeugs 10 überwacht wird.

Erfindungsgemäß erfolgt das Bestimmen der momentanen Fahrbahnkrümmung K gemäß dem Schritt S1 unter Verwendung eines Fahrzeug-Navigationssystems 30. Das Fahrzeug-Navigationssystem 30 kann eine Navigationssystem-Steuerungseinheit 33 in der Art eines herkömmlichen Mikrokontrollers aufweisen. Das Bestimmen der Fahrbahnkrümmung K erfolgt durch Auswerten von dem gerade befahrenen Fahrbahnabschnitt 20 zugeordneten Kartendaten D des Fahrzeug-Navigationssystems 30 durch die Navigationssystem-Steuerungseinheit 33, wobei die Kartendaten D in einem Datenspeicher 31 des Fahrzeug-Navigationssystems 30 abgelegt sein können. Die Zuordnung der Kartendaten D zu dem momentan durch das Kraftfahrzeug 10 befahrenen kurvenförmigen Fahrbahn-Abschnitt 20 erfolgt mit Hilfe eines Positionssensor 32 des Fahrzeug-Navigationssystem 30, welcher eine momentane Position P des Kraftfahrzeugs 10 an die Navigationssystem-Steuerungseinheit 33 ausgibt.

Zusätzlich zu den von dem optischen Detektionssystem 18 bereitgestellten Sensor-Ausgangsdaten werden erfindungsgemäß zur Berechnung der Fahrbahnkrümmung K also Kartendaten D des Fahrzeug-Navigationssystems 30 herangezogen und aus diesen die Fahrbahnkrümmung K_{N} extrahiert. Ein großer Vorteil der Verwendung solcher Kartendaten besteht darin, dass die Fahrbahnkrümmung K_{N} nicht erst beim Befahren eines bestimmten Fahrbahnabschnitts bestimmt werden kann, sondern durch entsprechendes Auslesen der Kartendaten für beliebige Fahrbahnabschnitte der im Fahrzeug-Navigationssystem 30 gespeicherten Kartendaten D ermittelt werden kann. Zudem enthalten solche Kartendaten D häufig ggf. auch weitere Karteninformationen wie z.B. eine Längsneigung und - wenn vorhanden - auch eine Querneigung des jeweiligen Fahrbahnabschnitts 20. Da die Kartendaten D des Fahrzeug-Navigationssystems 30 alleine für die Bestimmung der Fahrbahnkrümmung K in einem Praxisbetrieb des Kraftfahrzeugs 10 nicht ausreichend sind, da die Kartendaten beispielsweise aufgrund von baulichen Veränderungen des Fahrbahnverlaufs veraltet sein können, erfolgt die Bestimmung der momentanen Fahrbahnkrümmung K unter Verwendung des Fahrzeug-Navigationssystems 30 erfindungsgemäß nur unterstützend zu einer eigentlichen Bestimmung der Fahrbahn-Krümmung K mittels des optischen Detektionssystems 18. Beispielsweise kann aus den Kartendaten D die gewünschte momentane Fahrbahnkrümmung K_{N} des gerade befahrenen Fahrbahn-Abschnitts 20 extrahiert und mit der mittels des optischen Detektionssystems 18 bestimmten momentanen Fahrbahn-Krümmung K verglichen werden. Auch ist denkbar, die mittels des Fahrzeug-Navigationssystems 30 ermittelte momentane Fahrbahn-Krümmung K_{N} zur Verifizierung der mittels des optischen Detektionssystems 18 ermittelten momentanen Fahrbahn-Krümmung K heranzuziehen. Insbesondere kann daran gedacht sein, dass von dem Fahrzeug-Navigationssystem 30 mittels des optischen Detektionssystems 18 bestimmte, fehlerbehaftete Werte der momentanen Fahrbahnkrümmung K korrigiert werden können. Ein solcher fehlerbehafteter Wert kann beispielsweise durch intensive Sonnenbestrahlung eines optischen Sensors des optischen Detektionssystems 18 hervorgerufen werden. Die momentane Querbeschleunigung a_{y} des Kraftfahrzeugs 10 kann dann aus der von dem optischen Detektionssystem 18 in Verbindung mit dem Fahrzeug-Navigationssystem 30 ermittelten momentanen Fahrbahnkrümmung K und einer momentanen Geschwindigkeit vₓ des Kraftfahrzeugs 10 über die Beziehung ay = K · vₓ² berechnet werden. Die momentane Geschwindigkeit vₓ kann hierfür mittels eines in dem Kraftfahrzeug 10 verbauten Geschwindigkeitssensors 6 bestimmt werden.

Die Bestimmung der momentanen Querbeschleunigung a_{y} gemäß Schritt S1 kann in einer im Folgenden erläuterten Variante des Ausführungsbeispiels nicht nur mittels des optischen Detektionssystems 18, sondern alternativ oder zusätzlich auch mittels einer nicht-optischen Sensorik 2 erfolgen. In ersterem Fall wird die momentane Fahrbahn-Krümmung K_{N} ausschließlich mittels des Fahrbahn-Navigationssystems 30 ermittelt (da ja kein optisches Detektionssystem zur Verfügung steht). Über die Beziehung a_{y} = K_{N} · • vₓ² kann die momentane Querbeschleunigung a_{y} des Kraftfahrzeugs 10 berechnet werden und dieser Wert für die momentane Querbeschleunigung a_{y} mit einem mittels der nicht-optische Sensorik 2 ermittelten Wert für die momentane Querbeschleunigung a_{y} verglichen werden.

Die nicht-optische Sensorik 2 kann für die Bestimmung der momentanen Querbeschleunigung a_{y} beispielsweise einen Beschleunigungssensor 3 umfassen, welcher als Sensor-Ausgangsdaten einen momentanen Sensor-Querbeschleunigungswert bereitstellt. Die Sensor-Ausgangsdaten können mittels eines geeigneten Tiefpass-Filters 4 gefiltert werden, um unerwünschte hochfrequente Störungen (beispielsweise aufgrund von Unebenheiten in dem gerade befahrenen Fahrbahn-Abschnitt) in den vom Beschleunigungssensor 3 bereitgestellten Sensor-Ausgangsdaten auszufiltern. Vorteilhafterweise ist ein solcher Beschleunigungssensor 3 in dem Kraftfahrzeug bezüglich einer Fahrzeug-Längsrichtung L des Kraftfahrzeugs 10möglichst weit vorne am Kraftfahrzeug angeordnet (vgl. Fig.2a).

Alternativ oder zusätzlich zum Beschleunigungssensor 3 kann die nicht-optische Sensorik 2 auch einen Gierraten-Sensor 5 umfassen, welcher als Sensor-Ausgangsdaten eine momentane Giergeschwindigkeit d/dt ψ bereitstellt, wobei ψ der momentane Gierwinkel ist. Die Berechnung der momentanen Querbeschleunigung a_{y} aus der momentanen Giergeschwindigkeit erfolgt gemäß der Gleichung a_{y} = (d/dt ψ) vₓ, wobei a_{y} die momentanen Querbeschleunigung ist, d/dt ψ die momentane Giergeschwindigkeit ist, und vₓ die momentane Geschwindigkeit des Kraftfahrzeugs ist. Dies bedeutet, dass auch zur Bestimmung der momentanen Querbeschleunigung a_{y} aus der Gierrate d/dt ψ eine Kenntnis der momentanen Fahrzeug-Geschwindigkeit vₓ des Kraftfahrzeugs erforderlich ist. Die momentane Geschwindigkeit vₓ des Kraftfahrzeugs 10 kann zur Verwendung in dem erfindungsgemäßen Verfahren mittels des in dem Kraftfahrzeug 10 verbauten Geschwindigkeitssensors 6 ermittelt werden.

Die aus der Giergeschwindigkeit d/dt ψ berechnete momentane Querbeschleunigung a_{y} bezieht sich grundsätzlich auf einen Schwerpunkt des Kraftfahrzeugs 10. Daraus lässt sich die auf eine Vorderachse des Kraftfahrzeugs 10 bezogene Querbeschleunigung a_{y,VA} über die Beziehung a_{y,VA} = a_{y} + Iᵥ d/dt ψ berechnen, wobei Iᵥ der Abstand der vorderen Querachse des Kraftfahrzeugs zum Schwerpunkt des Kraftfahrzeugs 10 in einer Längsrichtung des Kraftfahrzeugs 10 ist. Die mittels der vom Gierratensensor bestimmte Giergeschwindigkeit berechnete momentane Querbeschleunigung a_{y} ist unabhängig von einer Querneigung des befahrenen Fahrbahnabschnitts 20.

Alternativ oder zusätzlich zu den vorangehend erläuterten Sensoren (Beschleunigungssensor 3 und Gierratensensor 5) kann die nicht-optische Sensorik 2 auch einen Lenkradwinkelsensor oder/und einen Radwinkelsensor 7 umfasst, welcher als Sensor-Ausgangsdaten dann einen momentanen Lenkradwinkel bzw. momentanen Radwinkel δ bereitstellt. Aus den vom Lenkradwinkelsensor bzw. Radwinkelsensor 7 bereitgestellten Sensor-Ausgangsdaten kann die momentane Querbeschleunigung a_{y} dabei unter Verwendung des sog. Einspurmodells mittels des Zusammenhangs a_{y} = vₓ² δ / (I + EG vₓ²) berechnet werden. Dabei ist δ der Lenkradwinkel bzw. Radwinkel, I der Radstand des Kraftfahrzeugs 10 und EG der sogenannte Eigenlenkgradient des Kraftfahrzeugs 10. Selbstverständlich können anstelle des Einspurmodells alternativ auch komplexere Zusammenhänge, welche ein Lenkmodel oder/und ein Reifeneinlauf-Verhalten des Kraftfahrzeugs 10 berücksichtigen, zur Berechnung der momentanen Querbeschleunigung a_{y} aus dem Lenkradwinkel ö bzw. Radwinkel herangezogen werden. Die momentane Geschwindigkeit vₓ des Kraftfahrzeugs kann wiederum mittels des in dem Kraftfahrzeug 10 verbauten Geschwindigkeitssensors 6 ermittelt werden.

Unabhängig davon, welche Sensoren die nicht-optische Sensorik 2 tatsächlich aufweist, kann in jedem Fall mittels des Fahrzeug-Navigationssystems 30 auf alternative Weise die momentane Querbeschleunigung a_{y} berechnet werden und zu Verifikationszwecken o.ä. verwendet werden.

In einem zweiten Schritt S2 des erfindungsgemäßen Verfahrens wird nun aus der vorangehend bestimmten momentanen Querbeschleunigung a_{y}(vₓ) eine momentane Soll-Kurvenneigung w(a_{y}) in Abhängigkeit von der momentanen Querbeschleunigung a_{y} des Kraftfahrzeugs bestimmt. Eine solche funktionale Abhängigkeit der momentanen Soll-Kurvenneigung w(a_{y}) von der momentanen Querbeschleunigung a_{y} kann in der Art eines Kennfeldes 8 festgelegt sein. Alternativ dazu kann aber auch ein analytischer Zusammenhang zwischen der momentanen Soll-Kurvenneigung w(vₓ) und der momentanen Querbeschleunigung a_{y} definiert sein.

In einem dritten Schritt S3 des erfindungsgemäßen Verfahrens wird aus der in Schritt S2 berechneten momentanen Soll-Kurvenneigung w(a_{y}) mittels Gewichtung mit einem geschwindigkeitsabhängigen Gewichtungsfaktor G(vₓ) eine modifizierte momentane Soll-Kurvenneigung w_{G} (a_{y}, vₓ) berechnet. Hierzu wird der Soll-Kurvenneigung-Gewichtungsfaktor G(vₓ) mit der vorangehend bestimmten momentanen Soll-Kurvenneigung w(a_{y}) multipliziert. Der geschwindigkeitsabhängige Gewichtungsfaktor G(vₓ) kann durch eine vorbestimmte funktionale Abhängigkeit des Gewichtungsfaktors G von der Geschwindigkeit vₓ des Kraftfahrzeugs festgelegt werden. Eine solche funktionale Abhängigkeit kann beispielsweise in der Art eines Kennfeldes 9 definiert sein; alternativ dazu kann aber auch ein analytischer Zusammenhang zwischen dem geschwindigkeitsabhängigen Gewichtungsfaktor G(vₓ) und der Geschwindigkeit vₓ definiert sein.

Es ist klar, dass das erfindungsgemäße Verfahren im Praxiseinsatz in einem Kraftfahrzeug iterativ durchgeführt werden kann, so dass beim Befahren eines kurvenförmigen Fahrbahnabschnitts 20 der mittels des erfindungsgemäßen Verfahrens berechnete Wankwinkel ständig aktualisiert werden und somit an sich ändernde Fahrbahn-Verhältnisse bzw. an Änderungen der momentanen Geschwindigkeit vₓ des Kraftfahrzeugs 10 angepasst werden kann.

Das erfindungsgemäße Verfahren kann ferner einen optionalen (in der Figur 1 gestrichelt dargestellten) Verfahrensschritt S2' umfassen, gemäß welchem festgestellt wird, ob eine vorbestimmte externe Bedingung B erfüllt ist, und, falls dies der Fall ist, die in Schritt S2 bestimmte momentane Soll-Kurvenneigung w(a_{y}) auf einen vorbestimmten Maximalwert wₘₐₓ reduziert wird, falls die momentane Soll-Kurvenneigung w(a_{y}) den vorbestimmten Maximalwert wₘₐₓ überschreitet. Eine solche externe Bedingung B kann beispielsweise die Betätigung eines Blinkers durch einen Fahrer des Kraftfahrzeugs sein, wenn dieser beim Befahren des gekrümmten Fahrbahnabschnitts einen Fahrspurwechsel beabsichtigt. Durch ein solches vorübergehendes Reduzieren der momentanen Soll-Kurvenneigung w(a_{y}) auf einen Maximalwert wₘₐₓ kann die Kurvenneigung des Kraftfahrzeugs 10 zusätzlich reduziert werden, um für die Insassen des Kraftfahrzeugs 10 einen Wechsel der Fahrspur möglichst komfortabel zu gestalten. Nach Abschluss eines solchen Spurwechsels kann dann die solche temporäre Reduktion der momentanen Soll-Kurvenneigung w(a_{y}) auf den vorbestimmten Maximalwert wₘₐₓ wieder aufgehoben werden. Selbstverständlich kommen als vorbestimmte externe Bedingungen B anstelle der vorangehend erläuterten Betätigung des Blinkers auch andere Ereignisse in Betracht. Beispielsweise kann in einer Variante daran gedacht sein, dass das ein optisches Detektionssystem einen beabsichtigten Fahrspurwechsel detektiert. In diesem Fall ist die vorbestimmte externe Bedingung B, die erfüllt sein muss, nicht das Betätigen eines Blinkers, sondern ganz allgemein ein von einem geeigneten Detektionssystem detektierter beabsichtigter Fahrspurwechsel des Kraftfahrzeugs 10.

In der Darstellung der Figur 2 ist ein Kraftfahrzeug 10 mit einer erfindungsgemäßen Vorrichtung 11 zum Bestimmen einer Soll-Kurvenneigung beim Befahren eines kurvenförmigen Fahrbahnabschnitts 20 gezeigt. Die Figur 2a zeigt das Kraftfahrzeug 10 dabei in einer Draufsicht, die Figur 2b in einer Rückansicht.

Die Vorrichtung 11 umfasst ein Steuergerät 12 sowie ein optisches Detektionssystem 18, mittels welchem eine momentane Fahrbahn-Krümmung K eines momentan von dem Kraftfahrzeug 10 befahrenen kurvenförmigen Fahrbahn-Abschnitts 20 bestimmbar ist. Die Vorrichtung 11 umfasst ferner ein Fahrzeug-Navigationssystem 30. Das Fahrzeug-Navigationssystem 30 kann eine Navigationssystem-Steuerungseinheit 33 in der Art eines herkömmlichen Mikrokontrollers aufweisen. Das Bestimmen der Fahrbahnkrümmung K erfolgt unter Verwendung des Fahrzeug-Navigationssystems 30. Hierzu werden dem gerade befahrenen Fahrbahnabschnitt 20 zugeordnete Kartendaten D des Fahrzeug-Navigationssystems 30 durch die Navigationssystem-Steuerungseinheit 33 ausgewertet und auf diese Weise die Fahrbahnkrümmung K_{N} bestimmt.

Die Kartendaten D können in einem Datenspeicher 31 des Fahrzeug-Navigationssystems 30 abgelegt sein. Die Zuordnung der Kartendaten D zu dem momentan durch das Kraftfahrzeug befahrenen kurvenförmigen Fahrbahn-Abschnitt 20 erfolgt mit Hilfe eines Positionssensor 32 des Fahrzeug-Navigationssystem 30, welcher eine momentane Position P des Kraftfahrzeugs an die Navigationssystem-Steuerungseinheit 33 ausgibt. Der Positionssensor 32 kann ein herkömmlicher GPS-Empfänger sein.

Erfindungsgemäß bestimmt das Steuergerät 12 mittels des optischen Detektionssystems 18 und in Kombination mit dem Fahrzeug-Navigationssystem 30 die momentane Fahrbahn-Krümmung K des kurvenförmigen Fahrbahn-Abschnitts 20 und daraus eine momentane Soll-Kurvenneigung w(vₓ) für das Kraftfahrzeug 10. Hierzu kann das Fahrzeug-Navigationssystem 30 mit dem Steuergerät 12 in Kommunikationsverbindung stehen und an das Steuergerät 12 einen momentanen Wert für die ermittelte Fahrbahn-Krümmung K übertragen. Aus der momentanen Soll-Kurvenneigung w(vₓ) wird von dem Steuergerät 12 schließlich durch Gewichtung mit einem Soll-Kurvenneigung-Gewichtungsfaktor G(vₓ) eine modifizierte Soll-Kurvenneigung w_{G}(vₓ) berechnet.

Die Vorrichtung 11 kann optional einen Beschleunigungssensor 3, einen Gierratensensor 5, einen Lenkwinkel-/Radwinkelsensor 7 oder/und einen Geschwindigkeitssensor 6 aufweisen, welche jeweils mit dem Steuergerät 12 in Kommunikationsverbindung stehen. Diese Sensoren bilden die nicht-optische Sensorik 2. Dabei übermittelt der Beschleunigungssensor die momentane Sensor-Querbeschleunigung a_{y}, der Lenkwinkel-/Radwinkelsensor 7 den momentanen Lenkradwinkel bzw. momentanen Radwinkel δ, und der Gierratensensor 5 die momentane Giergeschwindigkeit d/dt ψ an das Steuergerät 12. In vereinfachten Varianten kann auf einen oder zwei der vorangehend genannten drei Sensoren 3, 5, 7 verzichtet sein.

Das Steuergerät 12 kann eine Steuerungseinheit 13 (ECU) und eine mit der Steuerungseinheit 13 in Kommunikationsverbindung stehende Speichereinheit 14 umfassen. Die Steuerungseinheit 13 und die Speichereinheit 14 können in der Art eines herkömmlichen Mikrokontrollers ausgebildet sein, wobei dem Fachmann zahlreiche technische Realisierungsmöglichkeiten bekannt sind. Das Steuergerät 12 steht auch mit dem Geschwindigkeitssensor 6 in Kommunikationsverbindung, welcher die momentane Geschwindigkeit vₓ des Kraftfahrzeugs 10 an das Steuergerät 12 übermittelt. In dem Steuergerät 12 wird unter Verwendung der oben genannten Eingangsparameter (momentane Geschwindigkeit des Kraftfahrzeugs vₓ, Giergeschwindigkeit d/dt ψ oder/und momentaner Lenkradwinkel bzw. momentaner Radwinkel δ oder/und momentane Sensor-Querbeschleunigung a_{y}^{Sensor}) das erfindungsgemäße Verfahren durchgeführt. Die Kennfelder 8 und 9 können in der Speichereinheit 14 abgelegt sein und von der Steuereinheit 12 zur Durchführung der Verfahrensschritte S2 und S3 ausgelesen werden. Für den Fall, dass die Speichereinheit 14 ein beschreibbarer Speicher ist, lassen sich die Kennfelder 8 und 9 durch Überschreiben des entsprechenden Speicherbereichs in der Speichereinheit 14 modifizieren, beispielsweise, wenn für verschiedene Kraftfahrzeug-Typen individuelle Kennfelder verwendet werden sollen. Von dem Steuergerät 12 wird gemäß Schritt S1 des erfindungsgemäßen Verfahrens die momentane Querbeschleunigung a_{y}(vₓ) des Kraftfahrzeugs 10 berechnet. Aus der momentanen Querbeschleunigung a_{y}(vₓ) wird gemäß den Schritten S2 und S3 die modifizierte momentane Soll-Kurvenneigung w_{G}(vₓ) berechnet.

Das Kraftfahrzeug 10 umfasst eine von dem Steuergerät 12 ansteuerbare Fahrwerksvorrichtung 15, die in der Art eines elektro-hydraulisch aktiven Fahrwerks ausgebildet sein kann. Die Fahrwerksvorrichtung 15 umfasst vier als höhenverstellbare Federbeine ausgebildete Aktoren 16, wobei jedem Rad 17 des Kraftfahrzeugs ein Aktor 16 zugeordnet ist. Durch ein individuelles Einstellen der Stellhöhe der Aktoren 16 kann die mittels des erfindungsgemäßen Verfahrens bestimmte Soll-Kurvenneigung w_{G} (also der gewünschte Wankwinkel) an dem Kraftfahrzeug 10 eingestellt werden.

Alternativ zur vorangehend beschriebenen elektro-hydraulischen Fahrwerk-Vorrichtung 15 kann auch ein luftfeder-basiertes Fahrwerk mit geschlossener Druckversorgung verwendet werden. In einem solchen luftfeder-basierten Fahrwerk wird zum Verstellen der Federbeine die Luft in einem geschlossenen Kreislauf von einem Luftspeicher in die Luftfeder und umgekehrt gepumpt, was ein sehr schnelles Ein- und Ausfahren der Federbeine zum Einstellen der Soll-Kurvenneigung im Fahrwerk des Kraftfahrzeugs ermöglicht.

In einer weiteren Alternative zum elektro-hydraulisch aktiven Fahrwerk kann ein unter dem Begriff "ACTIVE CURVE SYSTEM" bekanntes, hydraulisch verstellbares Fahrwerk zum Einsatz kommen, welches mit einer riemengetriebenen Hydraulikpumpe arbeitet und einen Ölbehälter im Motorraum sowie je einen Ventil-Block und aktive Stabilisatoren an Vorder- und Hinterachse aufweist. Auch eine solche hydraulische Fahrwerk-Vorrichtung lässt sich zur Einstellung der Soll-Kurvenneigung im Kraftfahrzeug verwenden.

## Patentansprüche

1. Verfahren (1) zum Bestimmen einer Soll-Kurvenneigung (w_{G}(vₓ)) eines Kraftfahrzeugs (10) beim Befahren eines kurvenförmigen Fahrbahnabschnitts (20), umfassend die folgenden Schritte:
a) Bestimmen einer momentanen Querbeschleunigung (a_{y}) des Kraftfahrzeugs in Abhängigkeit von einer momentanen Geschwindigkeit (vₓ) des Kraftfahrzeugs und einer mittels eines optischen Detektionssystems (18) bestimmten momentanen Fahrbahnkrümmung (K) des kurvenförmigen Fahrbahnabschnitts (20),
b) Berechnen einer momentanen Soll-Kurvenneigung w(a_{y}) für das Kraftfahrzeug aus der in Schritt a) bestimmten momentanen Querbeschleunigung (a_{y}),
c) Berechnen einer modifizierten momentanen Soll-Kurvenneigung w_{G}(a_{y}, vₓ) durch Gewichtung der in Schritt b) berechneten Soll-Kurvenneigung mit einem geschwindigkeitsabhängigen Soll-Kurvenneigung-Gewichtungsfaktor (G),
wobei das Bestimmen der momentanen Fahrbahnkrümmung (K) gemäß Schritt a) unter Verwendung eines Fahrzeug-Navigationssystems (30) des Kraftfahrzeugs (10) erfolgt.

2. Verfahren (1) nach Anspruch 1,
**dadurch gekennzeichnet, dass**
das Bestimmen der Fahrbahnkrümmung (K) mittels des Fahrzeug-Navigationssystems (30) durch Extraktion der Fahrbahnkrümmung (K_{N}) aus den dem gerade befahrenen Fahrbahnabschnitt (20) zugeordneten Kartendaten (D) des Fahrzeug-Navigationssystems (30) erfolgt, wobei die Zuordnung unter Verwendung einer von einem Positionssensor (32) des Fahrzeug-Navigationssystem (30) bereitgestellten momentanen Position (P) des Kraftfahrzeugs (10) erfolgt.

3. Vorrichtung (11) zum Bestimmen einer Soll-Kurvenneigung (w_{G}(a_{y}, vₓ)) eines Kraftfahrzeugs (10) beim Befahren eines kurvenförmigen Fahrbahnabschnitts (20),
- mit einem Steuergerät (12),
- mit einem optischen Detektionssystem (18), mittels welchem eine momentane Fahrbahn-Krümmung (K) eines momentan von dem Kraftfahrzeug (10) befahrenen kurvenförmigen Fahrbahn-Abschnitts (20) bestimmbar ist,
- mit einem Fahrzeug-Navigationssystem (30), welches einen Datenspeicher (31) mit Kartendaten (D) und einen Positionssensor (32) umfasst, und mittels welchem eine momentane Position (P) des Kraftfahrzeugs (10) bestimmbar ist,
- wobei das Steuergerät (12) mittels des optischen Detektionssystems (18) und in Kombination mit dem Fahrzeug-Navigationssystem (30) die momentane Fahrbahn-Krümmung (K) des kurvenförmigen Fahrbahn-Abschnitts (20) und daraus eine momentane Soll-Kurvenneigung (w(vₓ)) für das Kraftfahrzeug (10) bestimmt und aus dieser durch Gewichtung mit einem Soll-Kurvenneigung-Gewichtungsfaktor (G(vₓ)) eine modifizierte Soll-Kurvenneigung (w_{G}(vₓ)) berechnet.

4. Kraftfahrzeug (10),
- mit einer Vorrichtung (11) nach Anspruch 3,
- mit einer von dem Steuergerät (12) ansteuerbaren Fahrwerk-Vorrichtung (15), in welcher die von dem Steuergerät (12) bestimmte modifizierte Soll-Kurvenneigung (w_{G}(vₓ)) an dem Kraftfahrzeug (10) einstellbar ist.

## Claims

1. Method (1) for determining a target lateral sway (w_{G}(vₓ)) of a motor vehicle (10) when travelling on a curved carriageway section (20), the method comprising the following steps:
a) the determination of a current transverse acceleration (ay) of the motor vehicle as a function of a current speed (Vₓ) of the motor vehicle and of a current carriageway curvature (K) of the curved carriageway section (20) as detected by means of an optical detection system (18),
b) the calculation of a current target lateral sway (w(ay)) for the motor vehicle from the transverse acceleration (ay) determined in step a),
c) the calculation of a modified current target lateral sway (w_{G}(a_{y}, vₓ)) by weighting the target lateral sway calculated in step b) with a speed-dependent target lateral sway weighting factor (G),
wherein the current carriageway curvature (K) is determined in accordance with step a) using a vehicle navigation system (30) of the motor vehicle (10).

2. Method according to claim 2,
**characterised in that**
the carriageway curvature (K) is determined by means of the vehicle navigation system (30) by extracting the carriageway curvature (K_{N}) from the map data (D) of the vehicle navigation system (30) which are assigned to the carriageway section (20) currently travelled, wherein the data are assigned using a current position (P) of the motor vehicle (10) as provided by a position sensor (32) of the vehicle navigation system (30).

3. Device (11) for determining a target lateral sway (w_{G}(a_{y}, vₓ)) of a motor vehicle (10) when travelling on a curved carriageway section (20), the device comprising:
- a control unit (12),
- an optical detection system (18), by means of which a current carriageway curvature (K) of a curved carriageway section (20) currently travelled by the motor vehicle (10) can be determined,
- a vehicle navigation system (30), which comprises a memory (31) with map data (D) and a position sensor (32), and by means of which a current position (P) of the motor vehicle (10) can be determined,
- wherein the control unit (12) determines, by means of the optical detection system (18) and in combination with the vehicle navigation system (30), the current carriageway curvature (K) of the curved carriageway section (20) and therefrom determines a current target lateral sway (w(vₓ)) for the motor vehicle (10) and therefrom calculates a modified target lateral sway (w_{G}(vₓ)) by weighting with a target lateral sway weighting factor (G(vₓ)).

4. Motor vehicle (10), comprising
- a device (11) according to claim 3,
- a chassis device (15) controllable by the control unit (12), in which device the modified target lateral sway (w_{G}(vₓ)) determined by the control unit (12) can be set on the motor vehicle (10).

## Revendications

1. Procédé (1) destiné à déterminer une assiette théorique (WG(Vx)) d'un véhicule automobile lorsqu'il circule sur un tronçon (20) de chaussée curviligne, comprenant les étapes suivantes consistant à :
a) déterminer une accélération longitudinale momentanée (ay) du véhicule automobile en fonction d'une vitesse momentanée (vx) du véhicule automobile et d'un virage (K) momentané défini du tronçon (20) de chaussée curviligne,
b) calculer une assiette théorique w(ay) momentanée pour le véhicule automobile à partir de la vitesse longitudinale (ay) définie momentanée,
b) calculer une assiette théorique momentanée modifiée W_{G}(a_{y}, vₓ) par la pondération de l'assiette théorique calculée à l'étape b) avec un facteur de pondération (G) d'assiette théorique en fonction de la vitesse,
le virage momentané (K) étant déterminé dans l'étape a) à l'aide d'un système (30) de navigation de véhicule automobile (10).

2. Procédé (1) selon la revendication 1, **caractérisé en ce que** le virage (K) du tronçon de chaussée est déterminé à l'aide du système (30) de navigation de véhicule automobile par extraction du virage du tronçon de chaussée (K_{N}) à partir des données (D) de carte attribuées au tronçon (20) droit de chaussée parcourue du système (30) de navigation de véhicule automobile, l'attribution s'effectuant à l'aide d'une position (P) momentanée du véhicule automobile mise à disposition par un capteur de position (32) du système (30) de navigation du véhicule automobile.

3. Procédé (11) destiné à déterminer une assiette théorique (WG(Vx)) d'un véhicule automobile lorsqu'il circule sur un tronçon (20) de chaussée curviligne, au moyen :
- d'un appareil de commande (12),
- d'un système (18) de détection optique au moyen duquel un virage (K) momentané de chaussée d'un tronçon (20) de chaussée curviligne parcourue par le véhicule (10) peut être déterminé,
- d'un système (30) de navigation de véhicule automobile qui comprend un support de données (31) comportant des données de carte (D) et un capteur de position et au moyen duquel une position (P) momentanée du véhicule automobile peut être déterminée,
- l'appareil de commande (12) calculant à l'aide du système (18) de détection optique et en association avec le système (30) de navigation de véhicule automobile le virage (K) momentané de chaussée du tronçon (20) de chaussée curviligne et déterminant à partir de ceux-ci une assiette (w(vx)) théorique pour le véhicule automobile (10) et calculant par pondération avec un facteur de pondération d'assiette théorique (G(vx)) une assiette théorique modifiée (G(vx)).

4. Véhicule automobile (10),
- comprenant un dispositif (11) selon la revendication 3,
- comprenant un dispositif (15) de châssis pouvant être commandé, dans lequel l'assiette théorique déterminée modifié par l'appareil de commande (12) peut être réglé sur le véhicule automobile (10).
